# EUROPÄISCHE PATENTANMELDUNG

(11) **EP 4 074 446 A2**
(43) Veröffentlichungstag der Anmeldung: **19.10.2022**
(21) Anmeldenummer: 22166410.5
(22) Anmeldetag: 01.04.2022
(51) Int. Cl.: B23D 53/04, B23D 55/02, B23D 55/06

(54) **SÄGEVORRICHTUNG UND VERFAHREN ZUM RECYCELN VON WERKSTÜCKEN**

(30) Priorität: 02.02.2021 DE 102021102379
(71) Anmelder: INRO Industrierohstoffe GmbH, 63811 Stockstadt (DE)
(72) Erfinder: Westarp, Werner, 63825 Schöllkrippen (DE)
(74) Vertreter: Eisenführ Speiser

(57) **Zusammenfassung**

Die vorliegende Erfindung betrifft eine Sägevorrichtung (1), insbesondere für Schwerteile aus Stahl, Gusseisen (in GJL, GJV und GJS Qualitäten), NE-Metallen, Verbundmetallen sowie sägbaren Kunststoffen, sowie ein zugehöriges Recyclingverfahren. Die Sägevorrichtung (1) umfasst: eine portalartige Trägerstruktur (10), die dazu ausgebildet ist, ein zu sägendes Werkstück innerhalb der Trägerstruktur (10) aufzunehmen, wobei die Trägerstruktur (10) wenigstens zwei Führungspfeiler (12) und eine die Führungspfeiler (12) verbindende Stützstruktur (14) aufweist; zumindest ein Sägeband (20); zumindest zwei Umlenkeinrichtungen (30), die eingerichtet sind, das zumindest eine Sägeband (20) in einer Sägebandebene im Kreis zu führen, wobei das Sägeband (20) zwischen den Umlenkeinrichtungen (30) auf der gleichen Seite des Sägebandes (20) eine erste Schnittkante (22) und eine zweite Schnittkante (24) ausformt, einen Spannrahmen, der relativ zu der Trägerstruktur (10) bewegbar montiert ist und an dem die Umlenkeinrichtungen (30) und das Sägeband (20) derart gelagert sind, dass Umlenkebenen der Umlenkeinrichtungen (30) fluchten, um das Sägeband (20) unter Belastung genau zu führen, und zumindest eine Führungseinrichtung (40), die eingerichtet ist, den Spannrahmen vertikal zu führen.

## Beschreibung

Die vorliegende Erfindung betrifft eine Sägevorrichtung sowie ein Verfahren zum Recyceln von Werkstücken, insbesondere für großstückige Schwerteile aus Stahl, Gusseisen (in GJL, GJV und GJS Qualitäten), NE-Metallen, Verbundmetallen sowie sägbaren Kunststoffen.

Im Materialrücklauf aus Großanlagen kommt es regelmäßig dazu, dass Stücke aus Gusseisen oder Stahl dem Recyclingkreislauf wieder zugeführt werden sollen, die nicht chargier- oder gattierungsfähig sind.

Schwierigkeiten ergeben sich hier für Werkstücke die keine chargierfähigen Maße haben, die über eine Großschere oder eine Presse nicht bereits jetzt schon auf einsatzfähige Maße gebracht werden können. Vielmehr sollen Teile, die auf Grund ihres Gesamtgewichts und ihrer Wandstärken mit standardisierten Prozessen (Großschere, Brennschneiden, ...) an einer Entfallstelle oder auf einem Schrottplatz bzw. einem Lagerplatz nicht bearbeitet werden können oder dürfen, dennoch dem Recyclingkreislauf zur Verfügung stehen.

Beispiele derartiger Werkstücke sind schwere Walzen, Formkästen, Matrizen, Großpressen, Windkraftgetriebegehäuse, Schiffsmotoren, Stahlwerkskokillen, Flügel von Windkrafträdern, Flugzeugteile, etc.

Es ist Praxis, diese Teile entweder in einer Fallgrube mechanisch per herabfallendem Gewicht zu brechen, beispielsweise für Gusseisen, oder durch Brennschneiden per Autogenbrenner oder Sauerstofflanze, oder durch Sprengen, beispielsweise für Stahl, auf einsatzfähige Maße zu zerkleinern.

Nachteilig an diesen bekannten Methoden sind die damit verbundenen Umweltbelastungen, wie Lärm, in großen Mengen anfallender Grob- und Feinstaub und/oder Bodenerschütteru ngen.

CN 204249109 U betrifft eine Sägemaschine mit einer Säge, einer Bewegungsvorrichtung, einer Schneidvorrichtung, oberer und unterer Vorschubvorrichtungen und Schneidantriebsvorrichtungen. Die Schneidantriebsvorrichtungen sind auf beiden Seiten der Bewegungsvorrichtung symmetrisch angeordnet. Die oberen und unteren Vorschubvorrichtungen sind an den Schneidantriebsvorrichtungen angeordnet. Jede Schneidantriebsvorrichtung umfasst zwei große Riemenscheiben. Die beiden großen Riemenscheiben sind über ein Schneidband in Getriebeverbindung. Eine der großen Riemenscheiben wird von einem Hauptmotor angetrieben.

CN 106424937 A betrifft eine Portalstangenschneidemaschine, die einen Portalrahmen, einen Schneidemechanismus, Laufmechanismen, Zuführmechanismen und eine Arbeitsoberfläche umfasst. Der Portalrahmen ist mit zwei Portalständersäulen und einem Portalquerträger versehen, der zum Verbinden der beiden Portalständersäulen verwendet wird und sich vertikal bewegen kann. Der Schneidmechanismus umfasst ein Antriebsrad, ein angetriebenes Rad, ein ringförmiges Bandsägeblatt, das auf dem Antriebsrad und dem angetriebenen Rad in einer Hülsenart angeordnet ist, und einen Schneidemotor zum Antreiben des Antriebsrads zum Drehen, wobei das Antriebsrad und das angetriebene Rad am unteren Ende des Portalquerträgers quer angeordnet sind. Die Laufmechanismen sind an den unteren Enden der Portalständersäulen angeordnet und werden zum Antreiben der Portalständersäulen verwendet, um sich nach links und rechts zu bewegen.

Die Zuführmechanismen sind auf den Portalständersäulen angeordnet und werden zum Antreiben des Portalquerträgers verwendet, um sich vertikal zu bewegen. Die Arbeitsoberfläche befindet sich zwischen zwei Portalsäulen.

CN 108311754 A betrifft eine heterogene Teileschneidvorrichtung. Die große heterogene Teileschneidvorrichtung umfasst zwei zylindrische aufrechte Pfosten. Ein oberer Teleskopmechanismus ist an den oberen Enden der aufrechten Pfosten angeordnet und wird zum Regulieren des Abstands der beiden aufrechten Pfosten verwendet, so dass die große heterogene Teileschneidvorrichtung mit zu schneidenden Bauteilen unterschiedlicher Größe angepasst werden kann. Die beiden Seiten der aufrechten Pfosten sind jeweils mit einer Lagerschraubenanordnung versehen. Jede Lagerschraubenanordnung umfasst ein Lager und eine Schraubenstange, die in das Lager eingesetzt sind. Die oberen Enden der beiden Lagerschraubenbaugruppen sind jeweils mit einem Servomotor verbunden, der zum Antreiben der Schraube in der entsprechenden Lagerschraubenbaugruppe zum Drehen verwendet wird. Der Umfang jedes aufrechten Pfostens und der entsprechenden Lagerschraubenanordnung ist mit einer Schaufelhaltevorrichtung versehen und jede Schaufelhaltevorrichtung bewegt sich auf und ab, indem der entsprechende aufrechte Pfosten als Drehschiene aufgrund der Drehung der Schraube in der entsprechenden Lagerschraubenanordnung genommen wird.

FR 1098430 betrifft eine Steinsäge, die mit Schneidelementen aus Diamant oder anderen harten Materialien ausgestattet ist. Diese Säge besteht aus einem endlosen und flexiblen Schneidelement, das von Riemenscheiben geführt wird und parallel zu den Achsen der Riemenscheiben schneidet. Dieses Element besteht aus einem Band, das an einer Kante von Schneidelementen ausgekleidet ist. Das Band ist im Lagerbereich vor oder hinter jedem Einsatzschneidelement mit zu dieser Kante offenen Kerben vorgesehen, wobei die Schneidelemente an der Kante an Zungenenden, die sich elastisch aus der Bandebene herausbiegen können, angeordnet sind.

EP 0 011 318 A2 betrifft eine Säge zum Sägen entlang einer vertikalen Ebene aus Marmor, Granit und anderen harten Steinen, die dadurch gekennzeichnet ist, dass sie einen festen Stützrahmen in Form eines Portals aufweist, auf dem eine Baugruppe mit zwei Schwungrädern in vertikaler Richtung bewegt wird, zwischen denen ein bewegliches endloses Sägeband unter Spannung gehalten wird und die auf Schlitten montiert sind, die sich entlang von Führungen bewegen können, die in den festen Rahmen integriert sind, wobei Steuermittel vorgesehen sind, um das Vorrücken des Sägebandes während des Schneidens zu bewirken.

JP H08- 90 336 A betrifft eine Bandsägen-Schneidvorrichtung, die trotz kompakter Abmessungen ein großes Werkstück schneiden kann. Eine Schneidvorrichtung, die sich entlang einer Säule eines Körperrahmens auf- und abbewegt, ist in diesem Rahmen installiert, der in rechteckiger Parallelepipedform ausgebildet ist. In dieser Schneidvorrichtung sind jeweils eine Treibscheibe und eine angetriebene Scheibe horizontal aufgestellt, und ein Endlosbandsägeblatt ist sowohl in dieser Treibscheibe als auch in dieser angetriebenen Scheibe gespannt eingebaut. Außerdem wird zum Zeitpunkt des Schneidens die Schneidvorrichtung abgesenkt und das in einer horizontalen Ebene rotierende Bandsägeblatt wird mit einem Werkstück in Kontakt gebracht, so dass ein Schneiden stattfindet. Da ein großformatiges Werkstück auch dann schneidbar ist, wenn der Scheibendurchmesser nicht vergrößert wird, kann ein Vorrichtungskörper auf diese Weise kompaktiert werden.

CN 210 099 107 U betrifft einen vertikalen Slicer zum Schneiden von Linien für Thermosetplatten. Es hat ein hohes Maß an Automatisierung, hoher Schnittgenauigkeit und hoher Arbeitseffizienz; die erste Getriebescheibe wird angetrieben, um sich durch einen Getriebemotor zu drehen, und die zweite Getriebescheibe wird gedreht. Die Kreissägeblatt-Bewegung schneidet die Thermosetplatte, und der Spiralheber treibt den Messerhalter und die vertikale Schneidvorrichtung an, um sich linear von oben nach unten zu bewegen, um mehrere Reihen zu erreichen. Mehrere Sätze von Getriebeteilen werden gleichzeitig durch mehrere Reihen der Thermosetplatte befördert und synchronisieren die Bewegung mehrerer Reihen von wärmehärtbaren Platten, um die Schneidgenauigkeit der Wärmeplatte sicherzustellen und die Schneidkomponente zu verbessern; die erste Klemmvorrichtung und die zweite Klemmvorrichtung klemmen die wärmehärtbare Platte, um zu verhindern, dass die Thermosetplatte während des Schneidvorgangs beschädigt wird.

JP 2012-016 755 A betrifft ein Verfahren zum Schneiden eines Werkstücks durch eine Bandsägemaschine, bei dem ein langes Werkstück gleichzeitig in zwei Schnittpositionen geschnitten und in drei Teile geteilt wird. Bei dem Verfahren zum Schneiden des Werkstücks durch die Bandsägemaschine wird das lange Werkstück durch die Bandsägemaschine geschnitten, die ein endloses Bandsägeblatt umfasst, das sowohl um ein Antriebsrad als auch ein angetriebenes Rad gewickelt ist, die waagerecht oder senkrecht voneinander angeordnet und frei drehbar angeordnet sind. Das lange Werkstück wird gleichzeitig in zwei unterschiedlichen Schneidpositionen durch einen nach außen gerichteten Schneidteil und einen nach innen gerichteten Schneidteil des sich bewegenden/rotierenden Bandsägeblatts geschnitten, um das lange Werkstück gleichzeitig in drei Teile zu teilen. Die Bandsägemaschine enthält eine Schnittteilabstands-Einstelleinrichtung, die an einem beweglichen Rahmen angeordnet ist, der über oder neben einer Stützbasis zum Tragen des langen Werkstücks angeordnet ist und sich frei in die Richtung des langen Werkstücks bewegt, und die zum Einstellen des Abstands zwischen dem nach außen gerichteten Schneidteil und dem nach innen gerichteten Schneidteil des Bandsägeblatts verwendet wird, das um sowohl das Antriebsrad als auch das angetriebene Rad gewickelt ist, die frei drehbar angeordnet sind.

JP 2005-205 575 A betrifft eine Bandsägen-Schneidvorrichtung, die die Schnittbreite leicht an ein Werkstück anpassen kann, ohne dass umfangreicher Ausrüstungsraum oder Ausrüstungskosten erforderlich sind. Wenn die Schnittbreite in der Bandsägen-Schneidvorrichtung eingestellt wird, werden die variablen Schneidintervall-Scheiben durch die Antriebsscheiben-Bewegungsmotoren bewegt. Die beweglichen Scheiben werden automatisch in die Position bewegt, in der die Spannung, die auf ein Bandsägeblatt durch die Bewegung der variablen Scheiben mit variablem Schnittintervall ausgeübt werden soll, mit der auf die beweglichen Scheiben gedrängten Drängkraft durch Dämpfer ausgeglichen wird, und die Trennbreite zwischen dem einen und dem anderen Bandsägeblatt eingestellt wird.

CN 202 461 681 U betrifft eine Metallbandsägemaschine zum Schneiden eines Blech-Windkraftflansches und gehört zum technischen Gebiet der mechanischen Ausrüstung. Es zielt darauf ab, die Metallbandsägemaschine zum Schneiden des Blech-Windkraftflansches bereitzustellen. Ein von der Sägemaschine getragenes Sägeband kann horizontal schneiden; und ein von der Sägemaschine getragener Arbeitstisch kann sich horizontal bewegen und vorschieben. Kernpunkt des technischen Schemas ist, dass die Metallbandsägemaschine aus einem Portalrahmen besteht, der aus Portalsäulen und einem beweglichen Balken besteht, wobei die Portalsäulen vertikal angeordnet sind und rechteckige Querschnitte haben; der bewegliche Balken ist horizontal auf dem oberen Teil vor den Portalsäulen angeordnet und hat einen rechteckigen Querschnitt; Führungsschienen sind unterhalb des beweglichen Balkens zwischen den Portalsäulen angeordnet; und ein zylindrischer beweglicher Arbeitstisch ist auf den oberen Oberflächen der Führungsschienen angeordnet. Mit der Metallbandsägemaschine kann der Blechwindkraftflansch mit einem Scheibensägeband geschnitten werden. Die Metallbandsägemaschine zum Schneiden des Blech-Windkraftflansches ist einfach aufgebaut.

Keine dieser aus dem Stand der Technik bekannten Großsägen ist jedoch in der Lage, die im Recyclingbetrieb anfallenden Herausforderungen, insbesondere die Unterschiede in der Beschaffenheit der Werkstücke, mit befriedigendem Erfolg zu lösen, um große Werkstücke für den Weitertransport und/oder den Recyclingprozess schmelzofengerecht zu zerlegen.

Vor diesem Hintergrund war es eine Aufgabe der vorliegenden Erfindung, eine völlig neu konstruierte Sägevorrichtung und ein korrespondierendes Verfahren zum Recyceln von Werkstücken bereitzustellen, das die vorgenannten Nachteile jedenfalls reduziert.

Erfindungsgemäß wird die Aufgabe mit einer Sägevorrichtung gemäß Anspruch 1, einem zugehörigen Sägesystem gemäß Anspruch 11 und einem zugehörigen Verfahren zum Recyceln von Werkstücken gemäß Anspruch 12 gelöst.

Eine Sägevorrichtung, insbesondere für das Recycling von Schwerteilen aus Stahl, Gusseisen (in GJL, GJV und GJS Qualitäten), NE-Metallen, Verbundmetallen und/oder sägbaren Kunststoffen, wird vorgeschlagen. Die Sägevorrichtung umfasst eine portalartige Trägerstruktur, die dazu ausgebildet ist, ein zu sägendes Werkstück innerhalb der Trägerstruktur aufzunehmen, wobei die Trägerstruktur wenigstens zwei Führungspfeiler und eine die Führungspfeiler verbindende Stützstruktur aufweist. Die Sägevorrichtung umfasst ferner zumindest ein Sägeband, zumindest zwei Umlenkeinrichtungen, die eingerichtet sind, das zumindest eine Sägeband in einer Sägebandebene im Kreis zu führen, wobei das Sägeband zwischen den Umlenkeinrichtungen auf der gleichen Seite des Sägebandes eine erste Schnittkante und eine zweite Schnittkante ausformt, einen Spannrahmen, der relativ zu der Trägerstruktur bewegbar montiert ist und an dem die Umlenkeinrichtungen und das Sägeband derart gelagert sind, dass Umlenkebenen der Umlenkeinrichtungen fluchten, um das Sägeband unter Belastung genau zu führen, und zumindest eine Führungseinrichtung, die eingerichtet ist, den Spannrahmen vertikal zu führen.

Der Sägeprozess besteht somit darin, dass das Sägeband mittels der Führungseinrichtung laufend in Richtung der Schnittkanten vertikal bewegt wird und demnach gleichzeitig zwei Schnitte an dem Werkstück entstehen. Die Zielgröße der finalen Teile des Werkstückes, also insbesondere der Abstand der beiden Schnittkanten, wird durch die Größe und Anordnung der Umlenkeinrichtungen bestimmt.

Hierbei kommt dem Spannrahmen eine zentrale Rolle zu, da dieser die relative Lage der Umlenkeinrichtungen zueinander fixiert. Demnach ist gewährleistet, dass die Ebene, in der sich die jeweiligen Umlenkeinrichtungen bewegen bzw. drehen, fluchtet und die Führung des Sägebandes zu jeder Zeit präzise ist.

Die nach dem Doppelschnitt vorhandenen Teile können beispielsweise per Stapler/Bagger sortengerecht gelagert und der Vermarktung zugeführt werden. Damit ist gewährleistet, dass das Material den "bestmöglichen" Einsatzzweck finden kann und Ressourcen wie z. B. Roheisen und Legierungselemente möglichst weitgehend geschont werden.

Vorzugsweise und regelmäßig werden die durch das Sägen entstehenden Späne recycelt, so dass ein Materialverlust minimiert wird. Gegenüber dem Brennschneiden oder Arbeiten mit der Sauerstofflanze wird damit der Materialverlust deutlich reduziert, da kein Material verbrannt wird und kein Feinstaub in die Umwelt gelangt.

Vorzugsweise ist das Sägeband durch Wasser, Öl oder andere Kühlschmierstoffe gekühlt.

Vorzugsweise ist die Sägebandebene im Wesentlichen horizontal und senkrecht zu den Führungspfeilern ausgebildet. Die Schnitte können demnach vertikal im Wesentlichen von oben nach unten ausgeführt werden. Im Wesentlichen horizontal bzw. vertikal bezeichnet insbesondere eine Lage, die innerhalb eines Toleranzbereiches horizontal bzw. vertikal ist. Der Toleranzbereich ist vorzugsweise 10°, besonders bevorzugt 5°. Dies bedeutet, dass in Sonderfällen eine Schrägstellung der Sägebandebene, also eines Normalvektors der Sägebandebene, bezüglich des Führungspfeilers von bis zu 10° denkbar ist.

Vorzugsweise sind die erste Schnittkante und die zweite Schnittkante senkrecht zu der Sägebandebene ausgeformt. Demnach entfallen Führungen, beispielsweise zur Drehung des Sägebandes um 90°.

Vorzugsweise sind die erste Schnittkante und die zweite Schnittkante in Richtung der Führungspfeiler, insbesondere im Wesentlichen vertikal nach unten, ausgebildet.

Der Spannrahmen ist mittels einer zentral zwischen den Führungspfeilern an der Stützstruktur gelagerten Anordnung, insbesondere einer Hydraulikanordnung, vertikal verfahrbar.

Es kann somit ausreichen, einen einzigen Hydraulikzylinder beispielsweise mittig an der Stützstruktur anzuordnen, wodurch aufgrund des Spannrahmens eine gleichmäßige Bewegung der gesamten Sägebandebene entlang der Bewegung des Hydraulikzylinders erfolgt. Ein Synchronisieren, wie es beispielsweise bei der Anordnung mehrerer Hydraulikanordnungen wie Hydraulikzylindern der Fall ist, kann damit entfallen.

Beispielsweise kann die Hydraulikanordnung einen mittig über der Stützstruktur angeordneten Hydraulikzylinder enthalten, mittels der der gesamte Spannrahmen im Wesentlichen vertikal entlang der Führungspfeiler zum Zersägen des Werkstückes verfahrbar ist.

Die Sägevorrichtung weist wenigstens vier Umlenkeinrichtungen auf. Wenigstens drei der Umlenkeinrichtungen sind in der Sägebandebene derart verschiebbar, dass ein Abstand zwischen der ersten Schnittkante und der zweiten Schnittkante einstellbar ist.

Damit ist es möglich, dass die Größe der geschnittenen Werkstücke einstellbar ist, ohne dass die Umlenkeinrichtungen auszutauschen sind. Je nach Werkstück, beispielsweise dessen Größe und/oder Material, können also größere oder kleinere Schnittstücke erzeugt werden.

Vorzugsweise sind die Umlenkeinrichtungen in der Sägebandebene entlang einer linearen Führung stufenlos verschiebbar.

Eine lineare Führung ist besonders einfach zu konstruieren, so dass der Aufwand für die Fertigung der Sägevorrichtung beherrschbar bleibt. Zudem ermöglicht die stufenlose Verschiebung der Umlenkeinrichtungen eine beliebige Größe der resultierenden Schnittstücke.

Vorzugsweise ist wenigstens eine und besonders bevorzugt genau eine der Umlenkeinrichtungen unverrückbar an dem Spannrahmen montiert.

Vorzugsweise ist die Verschiebung der Umlenkeinrichtungen in wenigstens zwei unterschiedlichen Richtungen, insbesondere in zueinander senkrechten Richtungen, ermöglicht.

Vorzugsweise sind zwei Umlenkeinrichtungen senkrecht zu der ersten Schnittkante verschiebbar. Alternativ oder zusätzlich ist vorzugsweise eine Umlenkeinrichtung entlang der ersten Schnittkante verschiebbar, so dass eine Parallelverschiebung der ersten Schnittkante und der zweiten Schnittkante bei gleichem Sägeband ermöglicht ist.

Vorzugsweise enthält die Sägevorrichtung ferner eine Auflagestruktur zum Auflegen des Werkstückes, wobei die Auflagestruktur eine insbesondere fest verschraubte Bodenplatte und eine darauf drehbar montierte Karussellplatte aufweist, wobei die Karussellplatte die Auflage für das Werkstück ausbildet.

Vorzugsweise ist die Karussellplatte in wenigstens zwei Drehpositionen bezüglich der Bodenplatte drehfest fixierbar, insbesondere mittels einer Doppelverriegelung mit Bolzen fixierbar.

Vorzugsweise weist die Sägevorrichtung ferner einen Antrieb zum Antreiben wenigstens einer der Umlenkeinrichtungen auf, wobei ein Antreiben der Umlenkeinrichtung gleichzeitig einen ersten Schnitt gemäß der ersten Schnittkante und einen zweiten Schnitt gemäß der zweiten Schnittkante erzeugt.

Vorzugsweise ist die Sägevorrichtung derart ausgebildet, dass durch ein Verfahren mittels der Führungseinrichtung ein in der Trägerstruktur aufgenommenes, zu sägendes Werkstück zeitgleich nach Vorgabe in wenigstens zwei, vorzugsweise drei Teile zerlegt wird. In Abhängigkeit einer Position und Größe des Werkstückes, das sich entweder im Bereich der ersten Schnittkante, der zweiten Schnittkante oder beiden Schnittkanten befinden kann, wird das Werkstück demnach in zwei oder drei Teile zerlegt.

Vorzugsweise ist die Sägevorrichtung transportabel, so dass sie zu einem potenziellen Materiallager transportiert werden kann. Damit können Transportwege eingespart werden.

Die Trägerstruktur ist mehrteilig ausgeführt, wobei die einzelnen Teile für einen Transport trennbar sind.

Vorzugsweise umfassen die zumindest zwei Umlenkeinrichtungen jeweils eine Umlenkrolle.

Vorzugsweise ist eine Zielgröße der Schnitteile des Werkstücks durch die Größe der Umlenkrollen definiert.

Vorzugsweise sind die zumindest zwei Umlenkeinrichtungen auswechselbar eingerichtet.

Damit kann die Größe der entstehenden Schnittteile an die Anforderungen des Werkstücks angepasst werden.

Vorzugsweise weisen die zumindest zwei Umlenkeinrichtungen ein Kraftübertragungselement auf, das dazu ausgebildet ist, eine von der ersten Schnittkante und der zweiten Schnittkante auf das Werkstück ausgeübte Kraft aufzunehmen.

Vorzugsweise ist das Kraftübertragungselement als Vorsprung ausgebildet, an dem das Sägeblatt senkrecht zu der Sägebandebene anliegt, wobei der Vorsprung auf der der ersten Schnittkante und der zweiten Schnittkante gegenüberliegenden Seite des Sägebandes ausgebildet ist.

Vorzugsweise weist die Trägerstruktur Rollen auf, die derart ausgebildet sind, dass die Sägevorrichtung mittels eines Schienensystems entlang des Werkstücks verfahrbar ist. Alternativ zu einem Verfahren des Werkstückes ist demnach auch ein Verfahren der Sägevorrichtung relativ zu dem Werkstück denkbar.

In einem weiteren Aspekt wird ein Sägesystem mit mehreren aneinander gereihten erfindungsgemäßen Sägevorrichtungen vorgeschlagen (Reihenaufstellung).

Mehrere aneinander gereihte Sägevorrichtungen ermöglichen, dass große Werkstücke in kurzer Zeit zerkleinert werden können, da eine größere Zahl an Schnitten gleichzeitig durchgeführt werden kann. Gleichzeitig erhält das Sägesystem den mobilen Charakter der Sägevorrichtung, da ein Transport der einzelnen Sägevorrichtungen möglich ist.

Erfindungsgemäß wird ferner ein Verfahren zum Recyceln von Werkstücken, insbesondere Schwerteilen aus Stahl, Gusseisen (in GJL, GJV und GJS Qualitäten), NE-Metallen, Verbundmetallen sowie sägbaren Kunststoffen, beispielsweise schwerer Walzen, Formkästen, Matrizen, Großpressen, Windkraftgetriebegehäuse, Schiffsmotoren, Stahlwerkskokillen, Flügel von Windkrafträdern, Flugzeugteile etc. vorgeschlagen. Das Verfahren umfasst die folgenden Schritte:
- Bereitstellen einer erfindungsgemäßen Sägevorrichtung oder eines erfindungsgemäßen Sägesystems,
- Positionieren des Werkstückes in der portalartigen Trägerstruktur der Sägevorrichtung, insbesondere mittels Rollenbahn oder Schwertransportwagen, oder der portalartigen Trägerstruktur der Sägevorrichtung über dem Werkstück, insbesondere mittels eines Schienensystems,
- Sägen des Werkstückes in mindestens zwei, vorzugsweise drei Teile durch Bewegung der Führungseinrichtung entlang der Führungspfeiler,
   wobei die Schritte des Positionierens und des Sägens so lange wiederholt werden, bis sämtliche Teile des Werkstückes ein vorbestimmtes Maß unterschreiten.

Das Verfahren ermöglicht daher einen umweltverträglichen Zerkleinerungsprozess, der Werkstücke erschütterungsfrei und mit einer definierten Lärmbelastung zu zerkleinern ermöglicht. Ferner ist, bei einem durch Wasser, Öl oder andere Kühlschmierstoffe gekühlten Sägeblatt, eine staubfreie Zerkleinerung möglich.

Erfindungsgemäß wird ferner die Verwendung einer Bandsäge zum Recyceln von Stahl, Gusseisen (in GJL, GJV und GJS Qualitäten), NE-Metallen, Verbundmetallen sowie sägbaren Kunststoffen vorgeschlagen.

Weitere Vorteile und Ausgestaltungen werden nachfolgend unter Bezugnahme auf die beigefügte Zeichnung beschrieben.

Hierbei zeigen:
- Fig. 1: schematisch und exemplarisch eine erste Sägevorrichtung;
- Fig. 2: schematisch und exemplarisch eine Umlenkeinrichtung;
- Fig. 3: schematisch und exemplarisch eine weitere Umlenkeinrichtung;
- Fig. 4: schematisch und exemplarisch eine Sägebandführung;
- Fig. 5: schematisch und exemplarisch eine Sägevorrichtung;
- Fig. 6: schematisch und exemplarisch eine Sägebandführung;
- Fig. 7: schematisch und exemplarisch eine Sägebandführung;
- Fig. 8: schematisch und exemplarisch eine Sägevorrichtung mit Auflagestruktur und
- Fig. 9: schematisch und exemplarisch eine Draufsicht auf die Auflagestruktur der Fig. 8.

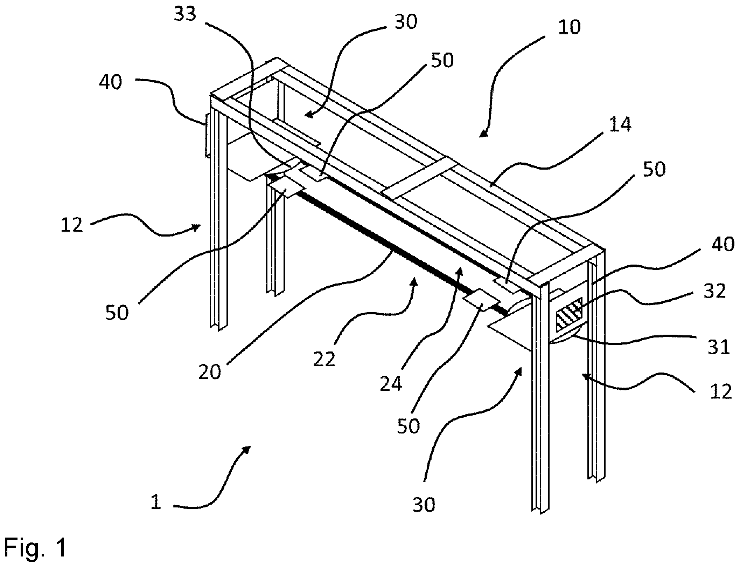

Fig. 1 zeigt schematisch und exemplarisch eine Sägevorrichtung 1 mit einer portalartigen Trägerstruktur 10, einem Sägeband 20, zwei Umlenkeinrichtungen 30 und einer Führungseinrichtung 40, wobei die Darstellung und nachfolgende Beschreibung dem Verständnis der vorliegenden Erfindung dient.

Die portalartige Trägerstruktur 10 umfasst Führungspfeiler 12 und eine die Führungspfeiler verbindende Stützstruktur 14, die im Ergebnis ein Portal bilden, innerhalb dessen ein Werkstück, insbesondere ein Schwerteil aus Stahl, Gusseisen (in GJL, GJV und GJS Qualitäten), NE-Metall, Verbundmetall sowie sägbarem Kunststoff, aufnehmbar ist.

In diesem Beispiel sind je Portalseite zwei voneinander in Portalrichtung axial beabstandete Führungspfeiler 12 vorgesehen, wodurch die Stabilität der Trägerstruktur 10 verbessert ist. Die Stützstruktur 14 verbindet die Führungspfeiler 12 an ihrer Oberseite und gewährleistet damit die Stabilität der Trägerstruktur 10.

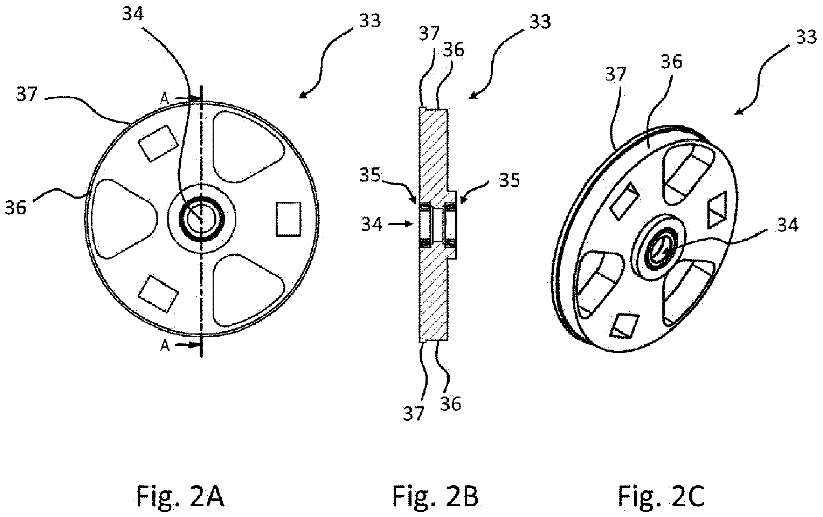

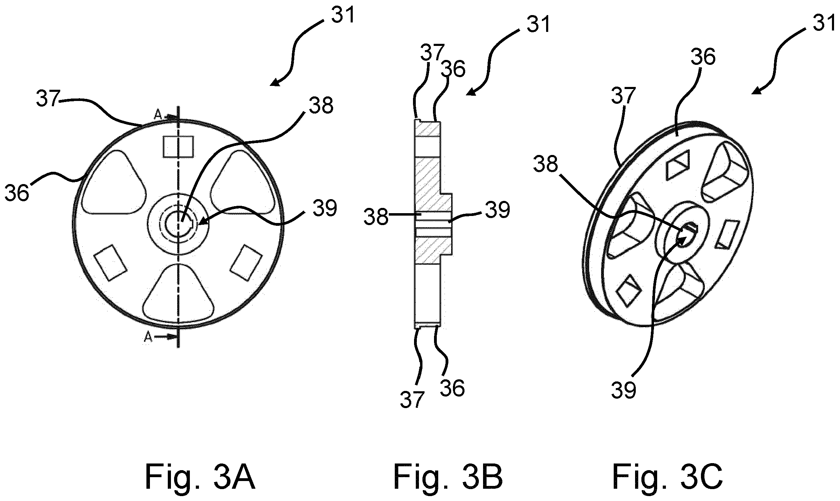

Zwischen den auf gegenüberliegenden Portalseiten liegenden Führungspfeilern 12 erstreckt sich das Sägeband 20. Das Sägeband 20 wird auf beiden Seiten des Portals mittels einer Umlenkeinrichtung 30 gehalten und im Kreis geführt. Die Umlenkeinrichtungen 30 werden mit Verweis auf die Fig. 2 und 3 genauer beschrieben.

Auf jeweils nach unten, das heißt von der Stützstruktur 14 weg, gerichteten Seiten des Sägebandes 20 ist eine erste Schnittkante 22 und eine zweite Schnittkante 24 ausgeformt. Mittels einer Antriebseinrichtung 32, beispielsweise eines elektrischen Motors, wird an wenigstens einer der Umlenkeinrichtungen 30 das Sägeband 20 angetrieben, so dass durch die Bewegung des Sägebandes 20 gleichzeitig zwei Schnitte in dem Werkstück, nämlich entsprechend der ersten Schnittkante 22 und der zweiten Schnittkante 24 entstehen.

Das Entstehen von zwei gleichzeitigen Schnitten setzt natürlich eine entsprechende Position und Größe des Werkstückes voraus, das jedenfalls den Abstand zwischen der ersten Schnittkante 22 und der zweiten Schnittkante 24 überbrücken muss. Auch ist zu erwarten, dass beispielsweise bei einem letzten Zerkleinerungsschritt eines Werkstückes regelmäßig aufgrund der verbleibenden Größe nur noch ein Zersägen in zwei statt der drei möglichen Teile in Betracht kommt.

In diesem Beispiel umfasst eine der Umlenkeinrichtungen 30 eine Antriebsscheibe 31, die von der Antriebseinrichtung 32 antreibbar ist, vgl. Fig. 3, während die andere der Umlenkeinrichtungen 30 eine Laufscheibe 33 aufweist, die nicht angetrieben wird, vgl. Fig. 2.

Beide Umlenkeinrichtungen 30 umfassen in dieser Ausführung einen vertikalen Abschnitt, der im Wesentlichen in der Ebene der Führungspfeiler 12 liegt, sowie einen horizontalen Abschnitt, der im Wesentlichen in der Ebene des Sägebandes 20 liegt und an dem die jeweilige Antriebsscheibe 31 bzw. Laufscheibe 33 montiert ist.

Um einen vollständigen Schnitt durch das Werkstück zu ermöglichen, ist die Sägevorrichtung 1 eingerichtet, die Umlenkeinrichtungen 30 samt Sägeband 20 vertikal in Richtung der Führungspfeiler 12 derart nachzuführen, dass das Sägeband 20 Schnitte im Wesentlichen vertikal von oben nach unten ausführt. Auch Schrägstellungen der Schnittkanten, Führungen und Führungspfeiler von bis zu 10° sind vorstellbar.

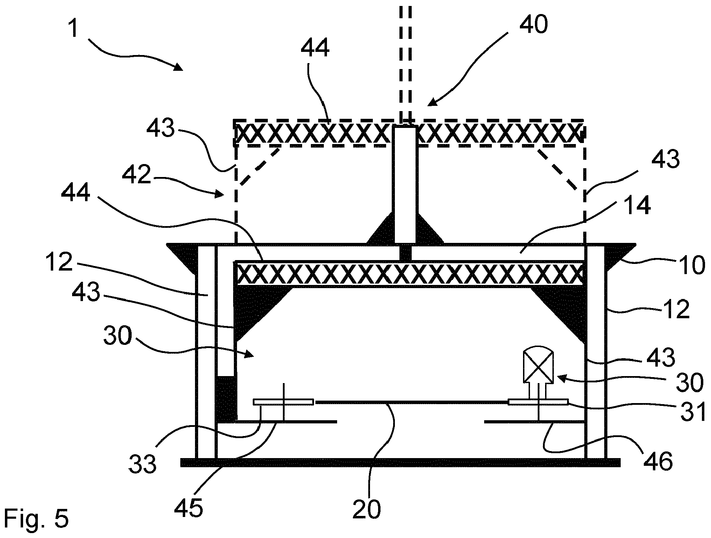

Die Führungseinrichtung 40 umfasst in dem in Fig. 1 gezeigten Beispiel vorzugsweise korrespondierende Führungsmittel an der Umlenkeinrichtung 30 sowie den Führungspfeilern 12, die eine lineare Führung der Umlenkeinrichtung 30 entlang der Führungspfeiler 12 ermöglicht. Eine andere Ausgestaltung der Führungseinrichtung 40 wird im weiteren Verlauf mit Verweis auf Fig. 5 beschrieben.

Die Bewegung entlang der Führung kann in einer einfachsten Ausgestaltung mittels der Schwerkraft erfolgen. Beispielsweise kann eine Fixierung oder ähnliches gelöst werden, woraufhin anschließend eine bekannte und definierte Kraft kontinuierlich über die Schnittkanten 22, 24 auf das Werkstück ausgeübt wird.

Die Bewegung entlang der Führungspfeiler 12 kann zusätzlich über geeignete Mittel gedämpft oder gebremst sein, um die ausgeübte Kraft zu beschränken.

Besonders bevorzugt umfasst die Führungseinrichtung 40 ein hydraulisches Antriebsmittel. Hydraulische Antriebe ermöglichen besonders gleichförmige und exakte Fahrbewegungen entlang der Führungsmittel.

Alternativ kann die Bewegung entlang der Führungspfeiler 12 elektrisch mittels eines geeigneten Antriebsmittels erfolgen.

Das Antriebsmittel kann lediglich auf einer der Seiten des Portals 10, mittig oder auf beiden Seiten vorgesehen sein, wobei dann vorzugsweise eine Synchronisierung der beiden Antriebsmittel erfolgt.

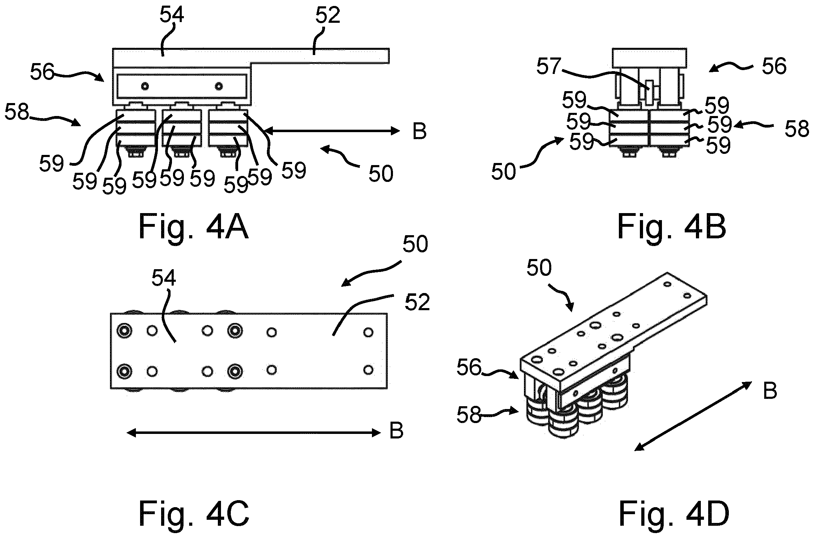

Das Sägeband 20 wird darüber hinaus über Sägebandführungen 50 geführt, die in diesem Beispiel vierfach ausgeführt sind. Die Sägebandführungen 50 sind vorzugsweise von den Umlenkeinrichtungen 30 getragen bzw. daran angebracht und unterstützen die sichere Führung des Sägebandes 20. Die Sägebandführungen 50 werden mit Verweis auf Fig. 4 näher beschrieben.

Nicht abgebildet sind dem Fachmann bekannte, geeignete Einrichtungen zur Kühlung insbesondere des Sägebandes 20, sowie zum Schutz bzw. zur Abdeckung der Sägevorrichtung 1, beispielsweise zur Vermeidung einer Verteilung von Staub oder Spänen in der Umgebung.

Je nach Ausführung kann das nicht abgebildete Werkstück relativ zu der Trägerstruktur 10 oder die Trägerstruktur 10 relativ zu dem nicht abgebildeten Werkstück verfahren werden. Hierfür eignen sich, für ein Verfahren des Werkstückes, insbesondere Rollenbahnen oder ein Schwertransportwagen. Für ein Verfahren der Trägerstruktur 10 ist besonders bevorzugt ein Schienensystem vorgesehen, wobei dann an den unteren Enden der Führungspfeiler 12 jeweils geeignete Rollen ausgebildet sind.

Mehrere erfindungsgemäße Sägevorrichtungen 1 können axial in Reihe zu einem Sägesystem kombiniert werden. Dadurch ist es möglich, die Anzahl der gleichzeitig zu tätigenden Schnitte und damit der gleichzeitig erhaltenen Teile des Werkstückes zu erhöhen.

Fig. 2A-2C zeigen schematisch und exemplarisch verschiedene Ansichten der Laufscheibe 33, wie sie in einer der in Fig. 1 gezeigten Umlenkeinrichtungen 30 zum Einsatz kommt. Fig. 2A zeigt eine Draufsicht von unten auf die Laufscheibe 33, Fig. 2B einen Schnitt an der in Fig. 2A mit A-A bezeichneten Position und Fig. 2C zeigt eine perspektivische Ansicht der Laufscheibe 33.

Die Laufscheibe 33 umfasst eine zentrale Bohrung 34 zur Aufnahme beispielsweise einer an der Umlenkeinrichtung 30 montierten Achse. Die Laufscheibe ist mittels Lagern 35, beispielsweise in Form von Kegelrollenlagern, drehbar bezüglich der zentralen Bohrung 34 gelagert. An einer Außenfläche 36 der Laufscheibe 33 liegt im Betrieb das Sägeband 20 an. Durch Drehung der Laufscheibe 33 wird auch das Sägeband 20 entsprechend bewegt.

Während des Sägens wirkt auf das Sägeband 20 eine der Schnittkante 22, 24 entgegengerichtete Kraft vertikal nach oben. Um eine Bewegung des Sägebandes 20 vertikal nach oben zu verhindern, weist die Laufscheibe 33 ferner einen Anschlag 37 auf, der eine Bewegung des Sägebandes 20 in Axialrichtung der Laufscheibe 30 verhindert. Der Anschlag 37 weist einen größeren Durchmesser als die Außenfläche 36 auf, steht also radial über die Außenfläche 36 hervor.

In der Laufscheibe 33 können, wie in der Fig. 2 erkennbar, weitere Bohrungen oder Öffnungen angeordnet sein, beispielsweise um das Gewicht der Laufscheibe zu verringern und/oder die Herstellung zu vereinfachen.

Fig. 3A-3C zeigen schematisch und exemplarisch verschiedene Ansichten der Antriebsscheibe 31, wie sie in der anderen der in Fig. 1 gezeigten Umlenkeinrichtungen 30 zum Einsatz kommt. Fig. 3A zeigt eine Draufsicht von unten auf die Antriebsscheibe 31, Fig. 3B einen Schnitt an der in Fig. 3A mit A-A bezeichneten Position und Fig. 3C zeigt eine perspektivische Ansicht der Antriebsscheibe 31.

Die Antriebsscheibe 31 entspricht in weiten Teilen der Laufscheibe 33, wobei anstelle der zentralen Bohrung 34 eine Bohrung 38 vorgesehen ist, die eine Aufnahme eines Drehmomentes ermöglicht. Zu diesem Zweck ist in diesem Beispiel eine sich radial von der Bohrung 38 erstreckende Nut 39 vorgesehen, wobei selbstverständlich auch andere zur Aufnahme von Drehmomenten geeignete Formen vorstellbar sind. Über die Bohrung 38 und die Nut 39 wird von der Antriebseinrichtung 32 ein Drehmoment auf die Antriebsscheibe 31 zum Antreiben des Sägebandes 20 übertragen.

Fig. 4A-4D zeigen schematisch und exemplarisch mehrere Ansichten einer Sägebandführung 50. Fig. 4A zeigt eine Seitenansicht quer zu einer Förderrichtung B des Sägebandes 20, Fig. 4B eine Vorder- bzw. Rückansicht, bei der die Förderrichtung B in der Zeichenebene liegt, Fig. 4C eine Draufsicht und Fig. 4D eine perspektivische Ansicht.

Die Sägebandführung 50 enthält einen Montageteil 52, der insbesondere zu einer Montage an der Umlenkeinrichtung 30 ausgebildet ist, und einen Führungsteil 54, der die eigentliche Führung des Sägebandes 20 ermöglicht.

Im Bereich des Führungsteils 54 ist eine vertikale Führung 56 und eine horizontale Führung 58 des Sägebandes 20 umgesetzt.

Die vertikale Führung 56 umfasst in diesem Beispiel mehrere in Förderrichtung B hintereinander angeordnete als Rillenkugellager 57 ausgebildete Lager, die einen Anschlag und eine Begrenzung der Bewegung des Sägebandes 20 in vertikaler Richtung bilden. In diesem Beispiel weist die vertikale Führung 56 der Sägebandführung 50 drei derartige Rillenkugellager 57 auf.

Die horizontale Führung 58 umfasst Paare von Lagern, die in horizontaler Richtung zu beiden Seiten des Sägebandes 20 angeordnet sind. Das Sägeband 20 wird also in horizontaler Richtung zwischen zwei Lagern der horizontalen Führung 58 geführt. In diesem Beispiel umfasst die horizontale Führung 58 18 als Rillenkugellager 59 ausgebildete Lager, von denen jeweils drei Gruppen von je drei Rillenkugellagern 59 auf jeder Seite des Sägebandes 20 ausgebildet sind.

Die in Fig. 4A-D gezeigte beispielhafte Ausgestaltung der Sägebandführung 50 ermöglicht eine sichere und zuverlässige Führung des Sägebandes 20 für die vorgesehenen Anwendungsfelder, wobei die konstruktiven Anforderungen möglichst gering gehalten werden, insbesondere keine überflüssigen Führungen vorhanden sind.

Fig. 5 zeigt schematisch und exemplarisch eine Sägevorrichtung 1, bei der die Führungseinrichtung 40 die vertikale Führung bzw. die Führung entlang der Führungspfeiler 12 über einen Spannrahmen 42 erfolgt.

Der Spannrahmen 42 ist relativ zu der Trägerstruktur 10 bewegbar montiert, insbesondere vertikal linear bewegbar montiert, und hat die Funktion, die Umlenkeinrichtungen 30, von denen hier besonders die Antriebsscheibe 31 und die Laufscheibe 33 gezeigt sind, derart zu lagern, dass das Sägeband 20 auch unter Belastung genau geführt wird, die Ebene des Sägebandes 20 also fest ist.

Durch den Spannrahmen 42 wird insbesondere sichergestellt, dass die Antriebsscheibe 31 und die Laufscheibe 33 zwangsweise synchronisiert und nicht unsynchronisiert laufen, wie es der Fall sein könnte, wenn zwei unabhängige Führungseinrichtungen 40 vorgesehen sind, wie dies in Fig. 1 gezeigt ist.

Die Funktion der Führungseinrichtung 40 übernimmt in Fig. 5 ein zentral an der Stützstruktur 14 angeordneter Hydraulikzylinder. Zusätzlich kann der Spannrahmen 42 optional seitlich an den Führungspfeilern 12 geführt werden, was die Stabilität der gesamten Sägevorrichtung 1 erhöht.

In Fig. 5 sind zwei Zustände der Sägevorrichtung 1 gezeigt. Mit gestrichelten Linien ist der Zustand gezeigt, in der sich der Spannrahmen 42 am oberen Ende der Trägerstruktur 10 befindet, sich das Sägeblatt 20 also oberhalb eines darunter angeordneten Werkstückes befindet. Für einen Sägevorgang wird dann, mittels der Führungseinrichtung 40, der Spannrahmen 42 als Ganzes abgesenkt während gleichzeitig das Sägeband zum Sägen bewegt wird, um einen Schnitt durch das Werkstück zu erzielen. Wenn schließlich das Sägeband 20 durch das gesamte zu zersägende Werkstück gedrungen ist, ist das Werkstück in mehrere Teile zersägt und der mit durchgezogenen Linien gezeigte Zustand des Spannrahmens 42 ist erreicht. Die Führungseinrichtung 40 kann den Spannrahmen 42 hiernach erneut anheben, um einen weiteren Schnitt vorzubereiten.

In diesem Beispiel enthält der Spannrahmen 42 vertikale Rahmenabschnitte 43, die durch einen horizontalen Rahmenabschnitt 44 an ihrer oberen Seite verbunden sind. Die Umlenkeinrichtungen 30 sind an Lagerungsabschnitten 45, 46 des Spannrahmens 42 angeordnet, die sich von einem unteren Ende der vertikalen Rahmenabschnitte 43 erstrecken.

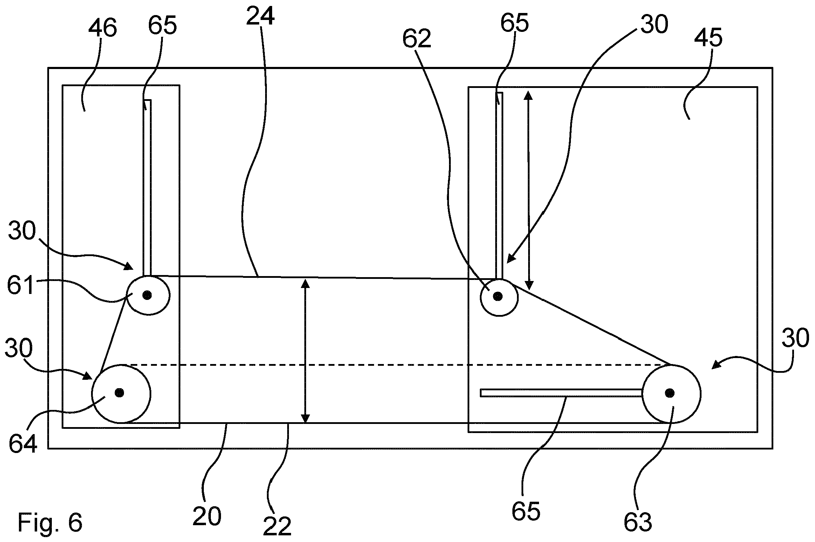

Fig. 6 zeigt schematisch und exemplarisch eine Ausführung der Sägevorrichtung 1, bei der vier beispielhaft als Umlenkrollen ausgestaltete Umlenkeinrichtungen 30, bezeichnet mit 61, 62, 63 und 64, jeweils paarweise auf beiden Seiten des Schnittbereiches angeordnet sind. Die in Fig. 6 gezeigte Ausführung ermöglicht, dass die Schnittbreite, das heißt der Abstand zwischen der ersten Schnittkante und der zweiten Schnittkante des Sägebandes 20, einstellbar ist.

Hierzu weisen drei der Umlenkeinrichtungen, nämlich die Umlenkeinrichtungen 61, 62 und 63 eine Führung 65 auf, entlang welcher die Umlenkeinrichtungen 61, 62 und 63 stufenlos verschiebbar sind.

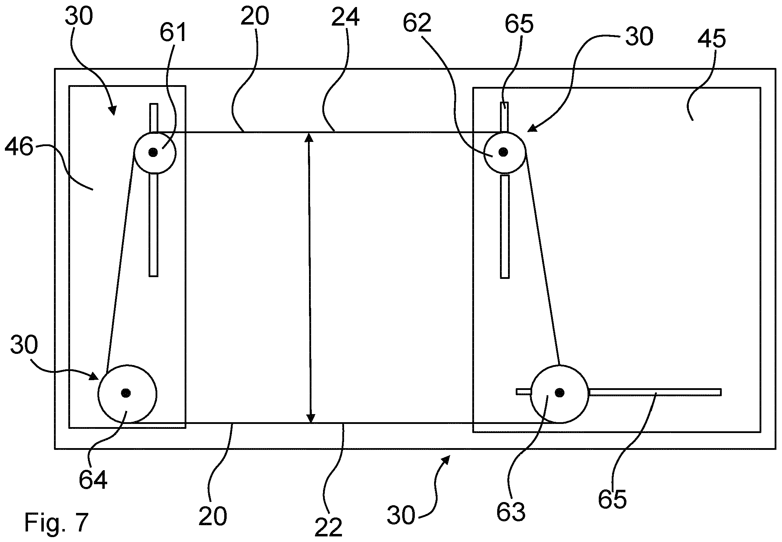

In der in Fig. 6 gezeigten Position ist der Abstand der beiden Sägekanten des Sägebandes 20 minimal, in der in Fig. 7 gezeigten Position nahezu maximal. Beliebige Zwischenstellungen sind möglich. Beispielsweise sind damit Abstände zwischen etwa 200 mm und 2000 mm, vorzugsweise zwischen 750 mm und 1000 mm, möglich.

Hierbei wird durch die Bewegung der Umlenkeinrichtungen 61 und 62 der Abstand zwischen den Sägekanten zur Einstellung der Schnittbreite variiert. Die Position der Umlenkeinrichtung 63 ist durch die Position der weiteren einstellbaren Umlenkeinrichtungen 61 und 62 festgelegt und durch die Länge des Sägebandes 20 bedingt. Damit kann die benötigte Spannung auf dem Sägeband 20 über den gesamten Einstellbereich des Abstandes zwischen den beiden Sägekanten gewährleistet werden.

Während die beiden Umlenkeinrichtungen 61 und 62 vorzugsweise derart eingestellt werden, dass zwei parallele Sägekanten entstehen, so sind auch schräge Sägekanten einstellbar.

Es sollte beachtet werden, dass sämtliche der Umlenkeinrichtungen 61, 62, 63 und 64 als beliebige der Umlenkrollen, wie sie in beispielsweise Fig. 2 und 3 gezeigt sind, ausgeführt werden können. In einem Beispiel ist die Umlenkeinrichtung 64 als Antriebsscheibe 31 ausgeführt, während die Umlenkeinrichtungen 61, 62 und 63 jeweils als Laufscheibe 33 ausgeführt sind. Auch andere Ausführungen der Umlenkeinrichtungen 61, 62, 63 und 64 sind vorstellbar. Der Durchmesser der Umlenkeinrichtungen kann gleich oder unterschiedlich sein, gezeigt sind beispielhaft kleinere Durchmesser der Umlenkeinrichtungen 61 und 62 verglichen mit dem Durchmesser der Umlenkeinrichtungen 63 und 64.

Die Ausführung der Fig. 6 lässt sich beliebig mit den in Fig. 1 und 5 gezeigten Sägen kombinieren, so ist auch die Anordnung der Umlenkeinrichtungen auf den Lagerungsabschnitten 45 und 46 lediglich beispielhaft gezeigt.

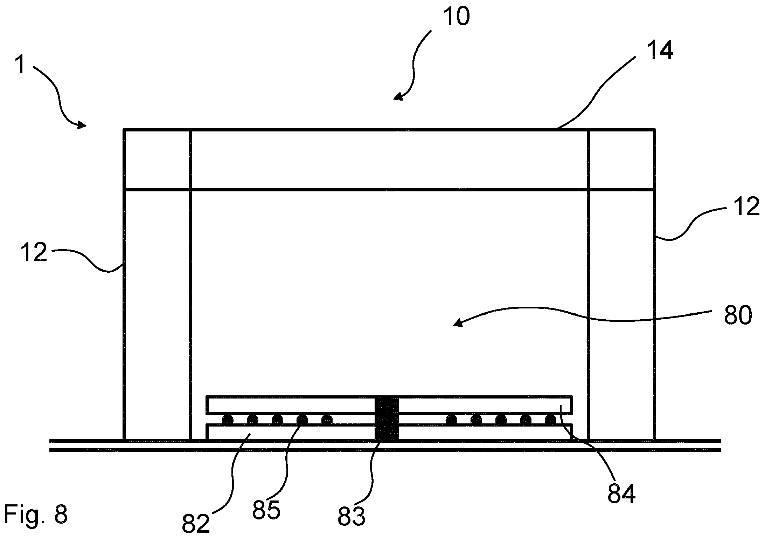

Fig. 8 zeigt schematisch und exemplarisch eine Sägevorrichtung 1 mit einer Auflagestruktur 80. Die Sägevorrichtung 1 kann eine beliebige der vorstehend beschriebenen Ausführungen oder Kombinationen davon sein, beispielsweise der Sägevorrichtung 1 der Fig. 5 mit Spannrahmen 42 und/oder mit der Ausgestaltung der Umlenkeinrichtungen, die in Fig. 6 und 7 gezeigt ist.

Die Auflagestruktur 80 ist ausgebildet, damit ein Werkstück, beispielsweise in der Größenordnung von 50.000 kg mit Maßen von H x B x L bis 3500 mm x 4000 mm x 10000 mm zum Zersägen aufgelegt werden kann. Die Maße der Trägerstruktur können entsprechend sein, beispielsweise ist eine Höhe von 4000 mm bis 4500 mm und eine Breite von 4000 mm bis 5000 mm vorteilhaft.

Die Auflagestruktur 80 umfasst eine Bodenplatte 82, die fest mit der Trägerstruktur 10 verschraubt ist, und eine darauf um eine Achse 83 drehbar gelagerte Karussellplatte 84. Zwischen Bodenplatte 82 und Karussellplatte 84 sind vorzugsweise geeignete Lager 85, beispielsweise Kugellager, vorgesehen.

Die Auflagestruktur 80 ermöglicht, dass ein auf der Karussellplatte 84 aufgelegtes Werkstück gegenüber der Trägerstruktur 10 um vorzugsweise 360° verdreht werden kann.

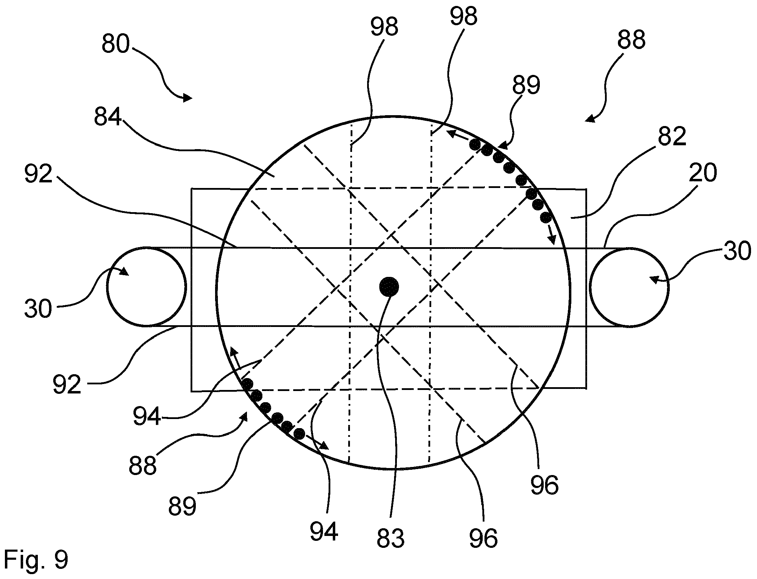

Fig. 9 zeigt eine schematische und exemplarische Draufsicht auf die Auflagestruktur 80 zur weiteren Erläuterung. Ausschnittsweise gezeigt ist ein am äußeren Rand ausgebildeter Lochkreis 88 mit mehreren Löchern 89, der sich vorzugsweise über den kompletten äußeren Rand der Karussellplatte 84 erstreckt.

Der Lochkreis 88 ist zur gegenüberliegenden Doppelverriegelung der Karussellplatte 84 bezüglich der Bodenplatte 82 ausgebildet, so dass eine ungewünschte Bewegung der Karussellplatte während des Sägevorgangs verhindert ist. Beispielsweise kann die Doppelverriegelung mit zu den Löchern 89 passenden Bolzen erfolgen.

Fig. 9 zeigt mit unterschiedlich darstellten Linien verschiedene Schnittkanten 92, 94, 96 und 98, die in unterschiedlichen Drehstellungen der Karusellplatte 84 durch das Sägeband 20 ermöglicht sind. Es kann gesehen werden, dass bereits das zweimalige Zersägen eines Werkstückes beispielsweise in den Stellungen der Karussellplatte 94, welche die Schnitte 92 und 98 zur Folge hat, im Ergebnis ein Zersägen des Werkstückes in neun Teile ermöglicht. Damit ist eine besonders aufwandsarme Zerkleinerung des Werkstückes möglich.

Hierbei sollte beachtet werden, dass die Ausführung mit lediglich zwei Umlenkeinrichtungen nur der Anschauung dient und auch die in Fig. 6 und 7 gezeigte, verstellbare Ausführung der Umlenkeinrichtungen besonders vorteilhaft mit der Auflagestruktur 80 kombinierbar ist.

## Patentansprüche

1. Sägevorrichtung (1), insbesondere für das Recycling von Schwerteilen aus Stahl, Gusseisen (in GJL, GJV und GJS Qualitäten), NE-Metallen, Verbundmetallen und/oder sägbaren Kunststoffen, umfassend:
eine portalartige Trägerstruktur (10), die dazu ausgebildet ist, ein zu sägendes Werkstück innerhalb der Trägerstruktur (10) aufzunehmen, wobei die Trägerstruktur (10) wenigstens zwei Führungspfeiler (12) und eine die Führungspfeiler (12) verbindende Stützstruktur (14) aufweist;
zumindest ein Sägeband (20);
zumindest vier Umlenkeinrichtungen (30), die eingerichtet sind, das zumindest eine Sägeband (20) in einer Sägebandebene im Kreis zu führen, wobei das Sägeband (20) zwischen den Umlenkeinrichtungen (30) auf der gleichen Seite des Sägebandes (20) eine erste Schnittkante (22) und eine zweite Schnittkante (24) ausformt,
einen Spannrahmen (42), der relativ zu der Trägerstruktur (10) bewegbar montiert ist und an dem die Umlenkeinrichtungen (30) und das Sägeband (20) derart gelagert sind, dass Umlenkebenen der Umlenkeinrichtungen (30) fluchten, um das Sägeband (20) unter Belastung genau zu führen, und
zumindest eine Führungseinrichtung (40), die eingerichtet ist, den Spannrahmen (42) im Wesentlichen vertikal zu führen, wobei
die Trägerstruktur (10) mehrteilig ausgeführt ist, wobei die einzelnen Teile für einen Transport trennbar sind,
der Spannrahmen (42) mittels einer zentral zwischen den Führungspfeilern (12) an der Stützstruktur (14) gelagerten Anordnung, insbesondere einer Hydraulikanordnung, als Führungseinrichtung (40) vertikal verfahrbar ist und
wenigstens drei Umlenkeinrichtungen (61, 62, 63) in der Sägebandebene derart verschiebbar sind, dass ein Abstand zwischen der ersten Schnittkante (22) und der zweiten Schnittkante (24) einstellbar ist.

2. Sägevorrichtung (1) nach Anspruch 1, wobei die Umlenkeinrichtungen (61, 62, 63) in der Sägebandebene entlang einer linearen Führung (65) stufenlos verschiebbar sind.

3. Sägevorrichtung (1) nach Anspruch 1 oder 2, wobei wenigstens eine, vorzugsweise genau eine, der Umlenkeinrichtungen (64) unverrückbar an dem Spannrahmen (42) montiert ist.

4. Sägevorrichtung (1) nach einem der Ansprüche 1 bis 3, wobei die Verschiebung der Umlenkeinrichtungen (30) in wenigstens zwei unterschiedlichen Richtungen, insbesondere in zueinander senkrechten Richtungen, ermöglicht ist.

5. Sägevorrichtung (1) nach Anspruch 4, wobei zwei Umlenkeinrichtungen (61, 62) senkrecht zu der ersten Schnittkante (22) verschiebbar sind und/oder wobei eine Umlenkeinrichtung (63) entlang der ersten Schnittkante (22) verschiebbar ist, so dass eine Parallelverschiebung der ersten Schnittkante (22) und der zweiten Schnittkante (24) bei gleichem Sägeband (20) ermöglicht ist.

6. Sägevorrichtung (1) nach einem der vorstehenden Ansprüche, die ferner eine Auflagestruktur (80) zum Auflegen des Werkstückes enthält, wobei die Auflagestruktur (80) eine insbesondere fest verschraubte Bodenplatte (82) und eine darauf drehbar montierte Karussellplatte (84) aufweist, wobei die Karussellplatte (84) die Auflage für das Werkstück ausbildet.

7. Sägevorrichtung (1) nach Anspruch 6, wobei die Karussellplatte (84) in wenigstens zwei Drehpositionen bezüglich der Bodenplatte (82) drehfest fixierbar ist, insbesondere mittels einer Doppelverriegelung mit Bolzen fixierbar ist.

8. Sägevorrichtung (1) nach einem der vorherigen Ansprüche, die ferner einen Antrieb (32) zum Antreiben wenigstens einer der Umlenkeinrichtungen (30) aufweist, wobei ein Antreiben der Umlenkeinrichtung (30) gleichzeitig einen ersten Schnitt gemäß der ersten Schnittkante (22) und einen zweiten Schnitt gemäß der zweiten Schnittkante (24) erzeugt.

9. Sägevorrichtung (1) nach Anspruch 8, wobei die Sägevorrichtung (1) derart ausgebildet ist, dass durch ein Verfahren mittels der Führungseinrichtung (40) ein in der Trägerstruktur (10) aufgenommenes, zu sägendes Werkstück zeitgleich in wenigstens zwei vorzugsweise drei Teile zerlegt wird.

10. Sägevorrichtung (1) nach einem der vorherigen Ansprüche, wobei die zumindest zwei Umlenkeinrichtungen (30) jeweils eine Umlenkrolle (31, 33) umfassen.

11. Sägesystem mit mehreren aneinander gereihten Sägevorrichtungen (1) nach einem der vorherigen Ansprüche.

12. Verfahren zum Recyceln von Werkstücken, insbesondere Schwerteilen aus Stahl, Gusseisen (in GJL, GJV und GJS Qualitäten), NE-Metallen, Verbundmetallen sowie sägbaren Kunststoffen, beispielsweise schwerer Walzen, Formkästen, Matrizen, Großpressen, Windkraftgetriebegehäuse, Schiffsmotoren, Stahlwerkskokillen, Flügeln von Windkrafträdern, Flugzeugteilen umfassend die folgenden Schritte:
- Bereitstellen einer Sägevorrichtung (1) nach einem der Ansprüche 1 bis 10 oder eines Sägesystems nach Anspruch 11,
- Positionieren des Werkstückes in der portalartigen Trägerstruktur (10) der Sägevorrichtung (1), insbesondere mittels Rollenbahn oder Schwertransportwagen, oder der portalartigen Trägerstruktur (10) der Sägevorrichtung (1) über dem Werkstück, insbesondere mittels eines Schienensystems,
- Sägen des Werkstückes in wenigstens zwei, vorzugsweise drei Teile durch Bewegung der Führungseinrichtung entlang der Führungspfeiler,
wobei die Schritte des Positionierens und des Sägens so lange wiederholt werden, bis sämtliche Teile des Werkstückes ein vorbestimmtes Maß unterschreiten.
